# EUROPÄISCHE PATENTSCHRIFT

(11) **EP 3 676 689 B1**
(45) Veröffentlichungstag und Bekanntmachung des Hinweises auf die Patenterteilung: **16.08.2023**
(21) Anmeldenummer: 18762495.2
(22) Anmeldetag: 29.08.2018
(51) Int. Cl.: G06F 3/01, G05B 19/042, G10L 15/26, F24C 7/08, H05B 1/02, H04L 12/28, G06F 3/03

(54) **HAUSHALTSASSISTENT**
HOUSEHOLD ASSISTANT
ASSISTANT MÉNAGER

(30) Priorität: 31.08.2017 DE 102017215279
(43) Veröffentlichungstag der Anmeldung: 08.07.2020
(73) Patentinhaber: BSH Hausgeräte GmbH, 81739 München (DE)
(72) Erfinder: SAGOO, Kiran Pal, 82256 Fürstenfeldbruck (DE); SCHÜSSLER, Andreas, 81541 München (DE); DJOHAR, Gabriel, 81369 München (DE); KIRSCHBAUM, Maike, 81545 München (DE)
(86) Internationale Anmeldenummer: PCT/EP2018/073260
(87) Internationale Veröffentlichungsnummer: WO 2019/043071

(56) Entgegenhaltungen:
- EP-A1- 3 082 049
- DE-A1-102015 210 879
- US-A1- 2011 288 964

## Beschreibung

Die Erfindung betrifft einen Haushaltsassistenten. Insbesondere betrifft die Erfindung einen Assistenten zur flexiblen Unterstützung eines Benutzers in einem Haushalt, beispielsweise bei einer Küchentätigkeit.

Ein Haushaltsassistent ist dazu eingerichtet, einen Benutzer bei einer Tätigkeit im Haushalt zu unterstützen. Der Haushaltsassistent kann beispielsweise dazu eingerichtet sein, eines oder mehrere Hausgeräte wie einen Herd, eine Dunstabzugshaube oder eine Waschmaschine zu steuern. Ein Benutzer kann bei der Steuerung eines Hausgeräts unterstützt werden, indem ein Benutzerwunsch erfasst und flexibel in ein Steuersignal umgesetzt wird.

DE 10 2015 210 879 A1 beschreibt eine Vorrichtung mit einer Kamera und einem Projektor, die interaktiv auf einen Nutzer in ihrem Umfeld reagieren kann. Die Vorrichtung ist zur Unterstützung eines Nutzers in einem Haushalt gedacht und umfasst eine Basis, mit der die Vorrichtung auf eine Standfläche gestellt werden kann. Die Vorrichtung weist eine erste Interaktionseinheit auf, die einen optischen Sensor umfasst, der eingerichtet ist, Bilddaten von einem Erfassungsbereich eines Umfelds der Vorrichtung zu erfassen. Dabei kann die erste Interaktionseinheit relativ zu der Basis bewegt werden, um den Erfassungsbereich zu verändern. Außerdem umfasst die Vorrichtung eine zweite Interaktionseinheit, die einen Projektor aufweist, der eingerichtet ist, ein Bild auf eine Projektionsfläche in dem Umfeld der Vorrichtung zu projizieren. Dabei kann die zweite Interaktionseinheit separat von der ersten Interaktionseinheit bewegt werden, um die Projektionsfläche des Projektors zu verändern. Die Vorrichtung umfasst weiter eine Steuereinheit, die eingerichtet ist, eine Position eines Nutzers der Vorrichtung im Umfeld der Vorrichtung zu ermitteln, und zu veranlassen, dass die erste Interaktionseinheit und die zweite Interaktionseinheit jeweils in Abhängigkeit von der Position des Nutzers bewegt werden. Außerdem ist die Steuereinheit eingerichtet, eine Eingabe des Nutzers zu ermitteln, und in Reaktion auf die Eingabe, den Projektor zu veranlassen, ein Bild auf die Projektionsfläche zu projizieren. Aus der EP 3 082 049 A1 und US 2011 / 0288 964 A1 sind ähnliche elektronische Geräte vorbekannt.

Bekannte Haushaltsassistenten umfassen üblicherweise eine Verarbeitungseinrichtung, eine Vielzahl Sensoren und eine Vielzahl Aktuatoren, die in einem gemeinsamen Gehäuse untergebracht sind. Der Haushaltsassistent kann dadurch nur schwer an neue Aufgaben angepasst werden.

Eine der Erfindung zu Grunde liegende Aufgabe besteht darin, einen verbesserten Haushaltsassistenten anzugeben. Die Erfindung löst diese Aufgabe mittels des Gegenstands des unabhängigen Anspruchs 1. Unteransprüche geben bevorzugte Ausführungsformen wieder.

Ein erfindungsgemäßer Haushaltsassistent umfasst ein Basismodul mit einer Benutzerschnittstelle mit einer Ausgabevorrichtung und einer Eingabevorrichtung zur Interaktion mit einem Benutzer; ferner eine Verarbeitungseinrichtung; eine drahtlose Datenschnittstelle zur Verbindung mit einem Erweiterungsmodul; und eine Energieschnittstelle zur Verbindung mit dem Erweiterungsmodul.

Der Haushaltsassistent ist dazu eingerichtet, einen Benutzer bei der Verrichtung einer Haushaltsaufgabe zu unterstützen, wobei die Haushaltsaufgabe beispielsweise in einer Küche stattfinden kann und bevorzugt eine Kochtätigkeit betrifft. Die Unterstützung kann beispielsweise das Abarbeiten eines Kochrezepts oder der Steuerung eines Hausgeräts wie eines Herds, einer Dunstabzugshaube, eines Ofens, eines Rührgeräts, einer Schneidemaschine etc. umfassen. Dabei kann der Haushaltsassistent insbesondere sozial, proaktiv und/oder interaktiv wirken.

Durch die Schnittstellen kann das Erweiterungsmodul bzw. Zusatzmodul leicht am Basismodul angebracht oder entfernt werden. Das Zusatzmodul kann austauschbar sein, sodass beispielsweise eine defekte Komponente leicht ersetzt oder eine bestehende Komponente gegen eine höherwertige ausgetauscht werden kann. Beispielsweise kann eine Kamera gegen eine empfindlichere, schnellere oder höher auflösende Kamera ausgetauscht werden. Die Schnittstellen können auch eine Erweiterbarkeit des Haushaltsassistenten ermöglichen. Ein Zusatzmodul kann an eine vorbestimmte Stelle, beispielsweise in oder an einem Arbeitsbereich eines Benutzers gebracht werden, sodass beispielsweise eine Zugänglichkeit des Zusatzmoduls durch den Benutzer verbessert sein kann.

Das Erweiterungsmodul kann prinzipiell eine beliebige Komponente umfassen, die bevorzugt für die beschriebene Unterstützung des Benutzers dienlich ist. Es können auch mehrere Erweiterungsmodule nacheinander oder gleichzeitig mit einer oder mehreren entsprechenden Schnittstellen verbunden werden. Bevorzugt umfasst das Erweiterungsmodul einen Sensor oder einen Aktor. Als Sensor bietet sich insbesondere eine Kamera und als Aktor ein Projektor an.

Das Erweiterungsmodul umfasst eine Kamera und optional einen Projektor, die zur interaktiven Benutzerführung eingerichtet sind. Dazu können ein Aufnahmefeld der Kamera und ein Darstellungsfeld des Projektors ganz oder teilweise überlappen. Mittels des Projektors kann etwa eine Bedienoberfläche auf eine Arbeitsfläche, eine Wand oder eine andere Fläche projiziert werden und eine Bedienung eines dargestellten Bedienelements kann mittels der Kamera optisch abgetastet werden. So kann eine Art projizierender Touchscreen geschaffen werden, der durch die Mobilität des Erweiterungsmoduls leicht an eine Stelle gebracht werden kann, an welcher der Benutzer eine Arbeit verrichtet. Der Benutzer ist dadurch weniger eingeschränkt in der Wahl seines Arbeitsplatzes und kann den Haushaltsassistenten flexibler oder effizienter nutzen.

Die Energieschnittstelle kann drahtlos sein. Dadurch können elektrische Kontakte vermieden werden, die stets einer Verschmutzungsgefahr unterliegen und die gegen Stromschlag, beispielsweise durch den Benutzer, gesichert werden müssen. Die Energieübermittlung erfolgt bevorzugt induktiv, wobei üblicherweise nur eine geringe Distanz von einigen cm überbrückt werden muss. In einer Ausführungsform kann die Energieschnittstelle auch eine größere Distanz von ca. 30 - 50 cm oder mehr überbrücken, sodass das Erweiterungsmodul nur in die ungefähre Nähe des Haushaltsassistenten gebracht werden muss, um eine Energieversorgung zu ermöglichen.

Das Erweiterungsmodul umfasst bevorzugt einen aufladbaren elektrischen Energiespeicher, sodass es zumindest für eine gewisse Zeit funktionsfähig vom restlichen Haushaltsassistenten getrennt werden kann. Der Energiespeicher ist bevorzugt aufladefähig und kann mittels der Energieschnittstelle aufgeladen werden. Dazu kann das Erweiterungsmodul an das Basismodul gebracht oder in das Basismodul eingesetzt werden.

Das Basismodul kann ein erstes Gehäuse und das Erweiterungsmodul ein zweites Gehäuse aufweisen. Dabei sind die Gehäuse bevorzugt derart geformt, dass sie sich zu einem einfachen geometrischen Körper ergänzen. Der Körper kann beispielsweise eine Pyramide, einen Würfel, einen Zylinder oder einen Quader umfassen. In einer Ausführungsform ist die Form des zweiten Gehäuses ähnlich zur Form der beiden zusammengesetzten Gehäuse. Beispielsweise können die beiden Gehäuse zusammen einen Würfel bilden und das Erweiterungsmodul kann selbst würfelförmig sein. Das würfelförmige Erweiterungsmodul kann leicht horizontal oder vertikal ausgerichtet werden, sodass das Erweiterungsmodul, insbesondere dann, wenn es eine Kamera oder einen Projektor umfasst, universell platziert werden kann. Unterschiedliche Elemente können leicht im würfelförmigen Erweiterungsmodul angeordnet werden. In einer weiteren Ausführungsform können auch mehrere Erweiterungsmodule mit mehreren zweiten Gehäusen vorgesehen sein, die zusammen das erste Gehäuse zu dem geometrischen Körper ergänzen. Die Erweiterungsmodule können gleich groß und gleich geformt sein. Es können auch mehr Erweiterungsmodule verwendet werden als zur Bildung des Körpers erforderlich ist.

Das Erweiterungsmodul kann eine Befestigungsvorrichtung zur Anbringung an einem Küchengegenstand umfassen. Die Befestigungsvorrichtung kann beispielsweise mechanisch sein und eine Öse, einen Haken oder einen Vorsprung umfassen, um etwa an einer Reling, einem Haken oder einer Kante angebracht zu werden. Die Befestigungsvorrichtung kann auch magnetisch sein und ein magnetisches oder ferromagnetisches Element umfassen. Damit kann das Erweiterungsmodul beispielsweise an einem magnetischen Fensterrahmen, einer Dunstabzugshaube oder einem sonstigen Gerät oder Möbel angebracht werden. Ferner kann die Befestigungsvorrichtung auch beispielsweise einen Saugnapf umfassen, um an einer bevorzugt glatten Fläche wie einer Glasscheibe, einer Kachel, einer Gerätewand oder einem Gerät befestigt zu werden. Kombinationen sind ebenfalls möglich.

Das Erweiterungsmodul kann mehrere Kameras umfassen, deren Blickfelder sich teilweise überlappen. Insbesondere können mehrere Kameras derart angeordnet sein, dass ihre Blickfelder zusammen eine Rundumsicht ermöglichen. Eine Lokalisierung eines oder mehrerer Benutzer im Raum oder eine Überwachung beispielsweise eines Arbeitsbereichs auf Gefahrenquellen (z. B. Feuer, Rauch, ein überkochender Topf) kann dadurch erleichtert sein.

Der Haushaltsassistent kann eine Schwenkeinrichtung umfassen, die dazu eingerichtet ist, den Haushaltsassistenten um eine Hochachse zu schwenken. Dadurch kann der Haushaltsassistent einen Wirkungsbereich eines Aktors oder einen Aufnahmebereich eines Sensors verbessert auf ein Ziel ausrichten. Der Haushaltsassistent kann auch eine Abtasteinrichtung zur Erfassung eines Benutzers und zur Bestimmung einer Richtung, in welcher der sich Benutzer befindet, aufweisen. Die Richtung kann als Horizontalwinkel oder Azimut ausgedrückt werden. Insbesondere in Verbindung mit der Schwenkeinrichtung kann der Haushaltsassistent verbessert einen Benutzer abtasten oder ihm beispielsweise eine Information darbieten, indem sich der Haushaltsassistent in die bestimmte Richtung dreht.

Ausführungsformen der Erfindung werden nun unter Bezug auf die beiliegenden Figuren genauer beschrieben, in denen:
- Fig. 1: eine schematische Darstellung eines modularen sozialen Haushaltsassistenten;
- Fign. 2 und 3: exemplarische Anwendungsfälle an einem modularen sozialen Haushaltsassistent; und
- Fig. 4: Darstellungen eines beispielhaften Haushaltsassistenten darstellen.

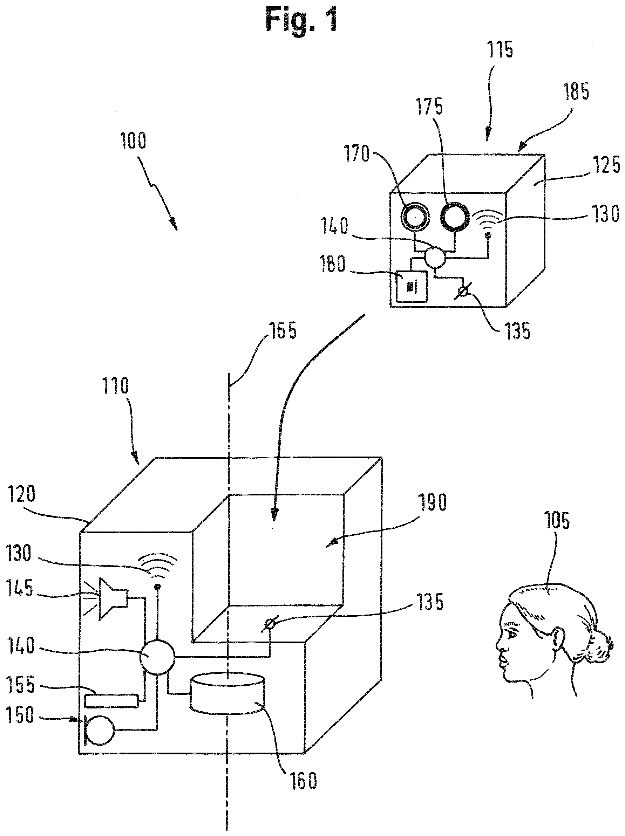

Figur 1 zeigt eine schematische Darstellung eines modularen sozialen Haushaltsassistenten 100, der dazu eingerichtet ist, einen Benutzer 105 bei der Durchführung einer Haushaltsaufgabe, insbesondere einer Küchenaufgabe, zu unterstützen. Der Haushaltsassistent 100 kann auch zusätzliche Aufgaben übernehmen, die bislang von dedizierten Geräten erledigt wurden, beispielsweise Telefonieren oder Stöbern im Internet.

Der Haushaltsassistent 100 umfasst ein Basismodul 110 und wenigstens ein Erweiterungsmodul 115. In der dargestellten, bevorzugten Ausführungsform umfasst das Basismodul 110 ein erstes Gehäuse 120 und das Erweiterungsmodul 115 ein zweites Gehäuse 125. Der Haushaltsassistent 100 umfasst eine Anzahl Einrichtungen, von denen eine oder mehrere im Erweiterungsmodul 115 angeordnet sein können. Dabei ist zwischen dem Basismodul 110 und dem Erweiterungsmodul 115 eine erste Schnittstelle 130 zur Kommunikation und/oder eine zweite Schnittstelle 135 zur Energieübertragung vorgesehen. Beide Schnittstellen 130, 135 können kabelgebunden oder drahtlos ausgeführt sein. Die erste Schnittstelle 130 kann insbesondere eine übliche Datenfunktechnologie wie WLAN, Bluetooth, ZigBee oder Mobildatenfunk oder auch eine Übertragung mittels Licht, insbesondere im Infrarotbereich, umfassen. Die zweite Schnittstelle 135 kann in einer kabelgebundenen Variante klassische elektrische Kontakte umfassen oder in einer drahtlosen Ausführungsform eine kapazitive oder induktive Übertragungsstrecke. Insbesondere wenn beide Schnittstellen 130, 135 drahtlos ausgeführt sind, können die Gehäuse 120, 125 verbessert hermetisch abgedichtet ausgeführt sein, sodass Feuchtigkeit oder Verschmutzungen die Funktion der Module 110, 115 nicht beeinträchtigen können.

Welche Komponenten des Haushaltsassistenten 100 auf welches der Module 110, 115 verteilt sind, kann in unterschiedlichen Ausführungsformen variieren. Die im Folgenden dargestellte Aufteilung ist daher als beispielhaft zu verstehen. Es ist zu beachten, dass alternative oder zusätzliche, nicht dargestellte Elemente vom Haushaltsassistent 100 umfasst sein können. Diese Elemente können beispielsweise eine Energieversorgung, etwa in Form eines Netzteils, eine Schnittstelle zu einem Weitverkehrsnetzwerk, insbesondere einem Mobilfunknetz oder dem Internet, einen Sensor wie einen Ultraschallsensor oder eine Ausgabeeinrichtung wie einen Anzeigebildschirm umfassen. Mittels des Netzwerks können beliebige Dienste oder zentrale Einrichtungen (Server) kontaktiert werden, beispielsweise um virtuelles soziales Kochen, soziale Medien oder das Herunterladen eines Rezepts zu ermöglichen. Lokal erhobene Daten, beispielsweise akustische oder Kameradaten, können lokal gespeichert oder zur weiteren Verarbeitung an einen solchen Dienst oder Server hochgeladen werden. Ferner können einer oder mehrere Sensoren vorgesehen sein, die beispielsweise einen Temperatursensor, einen Sensor für flüchtige organische Verbindungen (volatile organic compound, VOC), einen Lage- oder Beschleunigungssensor oder einen Feuchtigkeitssensor umfassen können.

Der Haushaltsassistent 100 umfasst bevorzugt eine Verarbeitungseinrichtung 140 und eine oder mehrere weitere Komponenten. Exemplarisch sind ein Lautsprecher 145, ein Mikrofon 150, eine optische Ausgabe 155 und eine Schwenkeinrichtung 160 vorgesehen, die dazu eingerichtet ist, das Basismodul 110 um eine Hochachse 160 zu schwenken. Ein Schwenkbereich beträgt bevorzugt 360°. Ferner sind in der Darstellung von Figur 1 eine Kamera 170 und ein Projektor vorgesehen, wobei diese beiden Komponenten hier beispielhaft vom Erweiterungsmodul 115 umfasst sind. Alle genannten Elemente sind optional, es ist jedoch bevorzugt, dass wenigstens eine Eingabevorrichtung 150, 170 und wenigstens eine Ausgabevorrichtung 145, 155, 175 zur Interaktion mit dem Benutzer 105 vorgesehen sind. Weitere Elemente umfassen bevorzugt einen Sensor oder einen Aktor. Alle Elemente können auch mehrfach vorgesehen sein, um ergänzend zu wirken.

Der Haushaltsassistent 100 ist bevorzugt dazu eingerichtet, eine Richtung zu bestimmen, in der sich der Benutzer 105 befindet. Dazu kann der Benutzer 105 beispielsweise mittels der Kamera 170 erkannt oder aufgrund einer Sprachäußerung mittels des Mikrofons 150 bzw. einer Anordnung mehrerer Mikrofone 150 akustisch geortet werden. Zur Ortung, zur Anzeige einer bestimmten Richtung oder zur Ausrichtung eines Erfassungsbereichs eines Sensors auf den Benutzer 105 kann das Basismodul 110 mittels der Schwenkeinrichtung 160 in die bestimmte Richtung des Benutzers 105 gedreht werden. Eine bestimmte Richtung oder ein Aktivierungszustand des Haushaltsassistenten 100 kann auch über die optische Ausgabe 155 angezeigt werden, die bevorzugt eine Reihe von Lichtquellen umfasst, die in horizontaler Richtung verteilt am Basismodul 110 angebracht sind. Bevorzugt erstreckt sich die optische Ausgabe 155 einmal vollständig um die Hochachse 165.

Eine Interaktion zwischen dem Benutzer 105 und dem Haushaltsassistenten 100 kann akustisch erfolgen, beispielsweise mittels Sprachsteuerung über das Mikrofon 150 und/oder Sprachausgabe über den Lautsprecher 145. Ferner kann eine optische Steuerung durchgeführt werden, beispielsweise mittels Gesten oder auf einer virtuellen Bedienoberfläche, die mittels des Projektors 175 auf eine beliebige Fläche projiziert und beispielsweise manuell bedient werden kann. Die Position und/oder Haltung einer Hand des Benutzers 105 kann dabei mittels der Kamera 170 abgetastet werden, deren Abtastbereich den Projektionsbereich des Projektors 175 überlappt.

Insbesondere um die Interaktion zwischen dem Benutzer 105 und dem Haushaltsassistenten 100 zu verbessern kann das Erweiterungsmodul 115 vom Basismodul 110 entfernt und an eine Stelle gebracht werden, an welcher der Benutzer 105 leichter mit ihm interagieren kann. Durch die erste Schnittstelle 130 können Elemente des Erweiterungsmoduls 105 seitens des Basismoduls 110 wie lokale Elemente behandelt werden, also zur Ein- und/oder Ausgabe beliebiger Informationen verwendet werden. Das Erweiterungsmodul kann einen lokalen Energiespeicher 180 umfassen, der insbesondere als aufladbarer elektrochemischer Energiespeicher 180 realisiert sein kann. Optional ist eine weitere Verarbeitungseinrichtung 140 im Erweiterungsmodul 115 vorgesehen, die zur Steuerung lokaler Abläufe, beispielsweise zur Verteilung von Energie und/oder Informationen, eingerichtet sein kann.

Das Erweiterungsmodul 115 kann eine Befestigungsvorrichtung 185 umfassen, mittels der es abseits vom Basismodul 110 befestigt werden kann. Die Befestigungsvorrichtung 185 kann beispielsweise einen Saugnapf, einen Haken, eine Öse, eine Kante oder eine andere Einrichtung umfassen, die bevorzugt eine leicht und universell herstellbare und trennbare Verbindung ermöglicht.

Das entfernbare Erweiterungsmodul 115 kann vorteilhaft frei positioniert werden, insbesondere in einem Umfeld des Benutzers 105. Nach dem Gebrauch kann das Erweiterungsmodul 115 zum Basismodul 110 gebracht und mit diesem so verbunden werden, dass der Energiespeicher 180 über die zweite Schnittstelle 135 aufgeladen werden kann. Bevorzugt sind die Gehäuse 120, 125 so gestaltet, dass sie sich zu einem einfachen geometrischen Körper ergänzen. Dadurch kann eine Schmutzempfindlichkeit des Haushaltsassistenten 100 reduziert sein, außerdem kann leicht erkannt werden, ob ein Erweiterungsmodul 115 vom Basismodul 110 entfernt wurde oder nicht. Die Form des Erweiterungsmoduls 115 kann der Form ähneln, die sich ergibt, wenn das Erweiterungsmodul 115 am Basismodul 110 angebracht wird. In der dargestellten, bevorzugten Ausführungsform ist das Erweiterungsmodul 115 würfelförmig und der Haushaltsassistent 100 ist ebenfalls würfelförmig, wenn das Erweiterungsmodul 115 am Basismodul 110 angebracht ist. Das Basismodul 110 umfasst für diesen Zweck eine Aussparung 190 von Form und Größe des Erweiterungsmoduls 110. Es können auch unterschiedliche Erweiterungsmodule 115 vorgesehen sein, die alternativ oder gleichzeitig am Basismodul 110 betrieben werden können. Dazu können mehrere Aussparungen 190 vorgesehen sein. Ist nur ein Erweiterungsmodul 115 vorhanden, so können alle bis auf eine Aussparung 190 mittels einer passenden Abdeckung verschlossen werden. Werden mehrere Erweiterungsmodule 110 verwendet, so können diese auch dazu eingerichtet sein, direkt untereinander mittels der ersten Schnittstelle 130 zu kommunizieren.

Bevorzugt rastet das Erweiterungsmodul 115 mechanisch mit einem vorbestimmten Widerstand am Basismodul 110 ein, sodass es gegen Verrutschen oder Herabfallen gesichert ist.

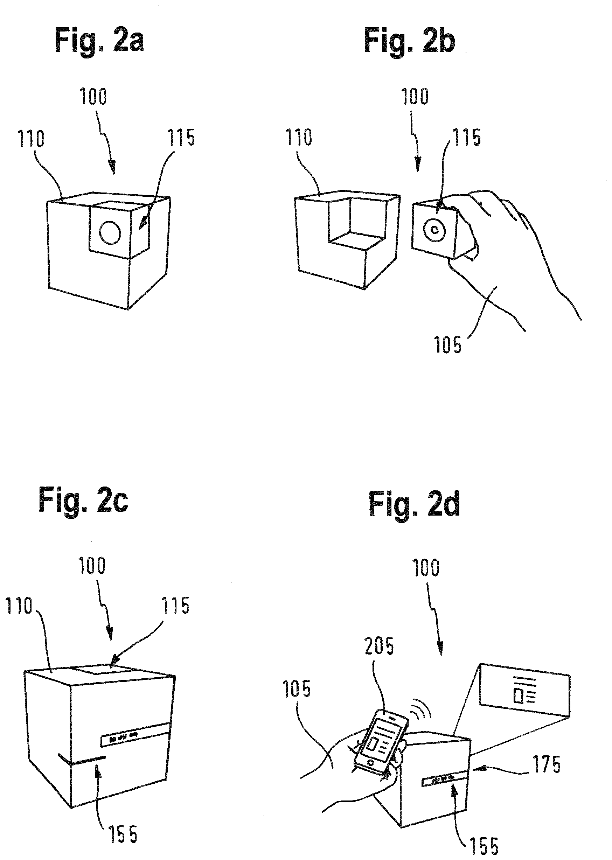

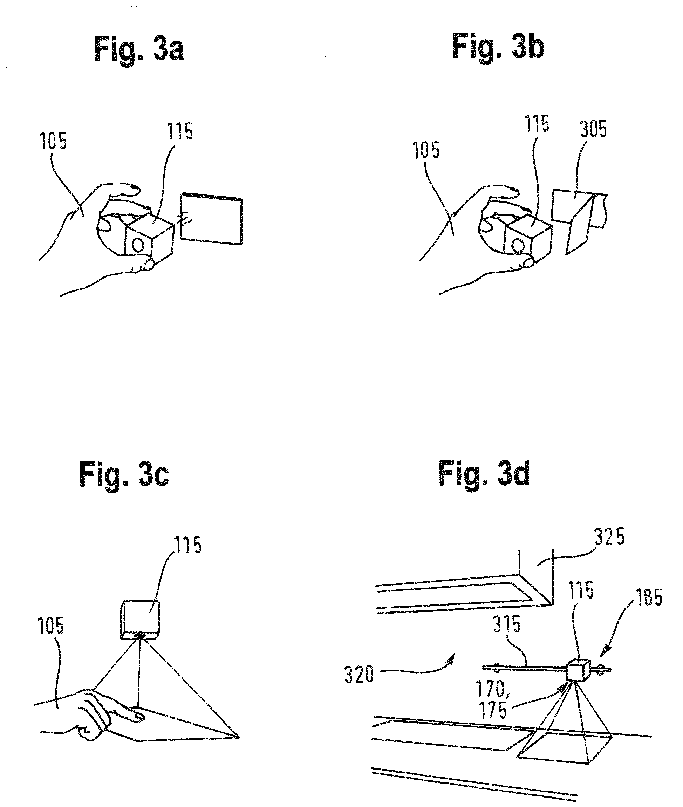

Figuren 2 und 3 zeigen exemplarische Anwendungsfälle an einem modularen sozialen Haushaltsassistent 100. Figur 2a zeigt schematisch einen Haushaltsassistenten 100 der Art von Figur 1, wobei das Erweiterungsmodul 115 am Basismodul 110 angebracht ist. Figur 2b zeigt das Erweiterungsmodul 115 vom Basismodul 110 durch den Benutzer 105 entfernt. Figur 2c zeigt den Haushaltsassistenten 100 aus einer anderen Perspektive. Deutlich sichtbar ist die optische Ausgabe 155, die hier nur einen Teil einer Gehäuseoberfläche des Basismoduls 110 abdeckt. Figur 2d zeigt einen Anwendungsfall, bei dem der Benutzer 105 mittels drahtloser Kopplung mit dem Haushaltsassistenten 100 - beispielsweise mittels der Datenschnittstelle 130 - den Bildschirminhalt eines Mobiltelefons 205 über den Projektor 175 ausgibt. Das Erweiterungsmodul 115 kann dabei am Basismodul 110 angebracht sein oder der Projektor 175 ist im Basismodul 110 angeordnet.

Figur 3a zeigt das Erweiterungsmodul 115 in einer Ausführungsform, in der die Befestigungsvorrichtung 185 als magnetisches Element 305 ausgeführt ist. Dadurch kann das Erweiterungsmodul 115 an einem beliebigen magnetischen bzw. ferromagnetischen Element wie beispielsweise an einer Dunstabzugshaube, einem Topf oder einem Messerblock angebracht werden. Figur 3b zeigt eine Variante, bei der die Befestigungsvorrichtung 185 in Form eines magnetischen Klebeelements 310 insbesondere stoffschlüssig am Erweiterungsmodul 115 angebracht werden kann. Alternativ kann auch beispielsweise ein Klettband angebracht werden. Figur 3c zeigt eine Verwendung, bei welcher die Kamera 170 eine Geste des Benutzers 105 optisch erfasst. Zusätzlich kann mittels des Projektors 175 ein Bedienelement auf eine Oberfläche projiziert werden, sodass der Benutzer 105 beim Berühren des Bedienelements eine vorbestimmte Funktion des Haushaltsassistenten 100 auslösen kann. Figur 3d zeigt einen ähnlichen Anwendungsfall, bei dem das Erweiterungsmodul 115 mittels seiner Befestigungsvorrichtung 185 beispielhaft an einer Reling 315 oder einem Gerätehalter befestigt ist. In anderen Ausführungsformen kann das Erweiterungsmodul 115 auch beispielsweise an einer Glasplatte 320, die etwa zum verbesserten Schutz vor Verschmutzung eine Wand abdecken kann, oder einer Dunstabzugshaube 325 befestigt werden.

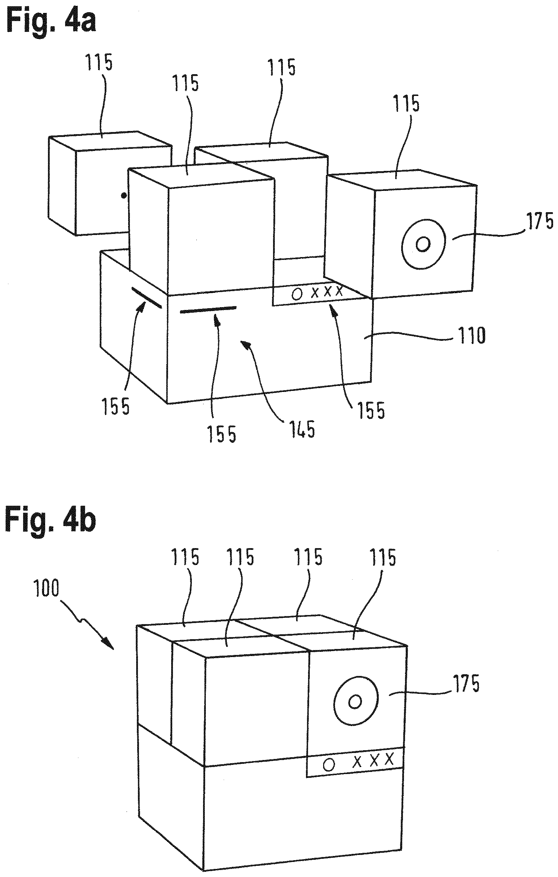

Figur 4 zeigt Darstellungen eines beispielhaften Haushaltsassistenten 100. Figur 4a zeigt eine teilweise als Explosionszeichnung ausgeführte Darstellung, Figur 4b den zusammengesetzten Haushaltsassistenten 100. Hier sind exemplarisch der Lautsprecher 145 und die optische Ausgabe 155 am Basismodul 110 angebracht. Verschiedene Erweiterungsmodule 115 umfassen eines mit einem Projektor 175 und eines mit einer oder mehreren Kameras 170. Zwei weitere Erweiterungsmodule 115 können beliebige Elemente tragen oder einfach leer sein. Werden in der dargestellten Ausführungsform alle Erweiterungsmodule 115 vom Basismodul 110 entfernt, so verbleibt ein quaderförmiger Sockel.

Die mit Bezug auf die Figuren gemachten Erläuterungen sind rein illustrativ und nicht beschränkend zu verstehen. An den gezeigten Ausführungsformen können viele Änderungen vorgenommen werden, ohne den Gegenstand der Erfindung, wie er in den beigefügten Ansprüchen festgelegt ist, zu verlassen.

### Bezugszeichen

- 100: Haushaltsassistent
- 105: Benutzer
- 110: Basismodul
- 115: Erweiterungsmodul
- 120: erstes Gehäuse
- 125: zweites Gehäuse
- 130: erste Schnittstelle (Daten)
- 135: zweite Schnittstelle (Energie)
- 140: Verarbeitungseinrichtung
- 145: Lautsprecher
- 150: Mikrofon
- 155: optische Ausgabe
- 160: Schwenkeinrichtung
- 165: Hochachse
- 170: Kamera
- 175: Projektor
- 180: Energiespeicher
- 185: Befestigungsvorrichtung
- 190: Aussparung
- 205: Mobiltelefon
- 305: magnetisches Element
- 310: magnetisches Klebeelement
- 315: Reling
- 320: Glasplatte
- 325: Dunstabzugshaube

## Patentansprüche

1. Haushaltsassistent (100), umfassend:
- eine Benutzerschnittstelle mit einer Ausgabevorrichtung in Form eines Lautsprechers (145) und einer Eingabevorrichtung in Form eines Mikrofons (150) zur Interaktion mit einem Benutzer (105); und
- eine Verarbeitungseinrichtung (140);
- wobei der Haushaltsassistent dazu eingerichtet ist, den Benutzer bei der Verrichtung einer Haushaltsaufgabe zu unterstützen,
- wobei die Interaktion zwischen dem Benutzer (105) und dem Haushaltsassistenten (100) mittels Sprachsteuerung über das Mikrofon und Sprachausgabe über den Lautsprecher erfolgt;
**dadurch gekennzeichnet, dass**
- der Haushaltsassistent ein Basismodul (110) und ein Erweiterungsmodul (115) umfasst und derartig ausgestaltet ist, dass das Erweiterungsmodul (115) so in das Basismodul (110) eingesetzt werden kann, dass das Erweiterungsmodul mechanisch mit einem vorbestimmten Widerstand am Basismodul einrastet und so gegen Verrutschen und Herabfallen gesichert ist;
- wobei das Erweiterungsmodul eine Kamera (170) aufweist; und
- das Basismodul weiterhin eine drahtlose Datenschnittstelle (130) zur Verbindung mit dem Erweiterungsmodul (115) und eine Energieschnittstelle (135) zur Verbindung mit dem Erweiterungsmodul (115) umfasst.

2. Haushaltsassistent (100) nach Anspruch 1, wobei das Erweiterungsmodul (115) einen Projektor (175) umfasst.

3. Haushaltsassistent (100) nach Anspruch 2, wobei die Kamera (170) und der Projektor (175) zur interaktiven Benutzerführung eingerichtet sind.

4. Haushaltsassistent (100) nach einem der vorangehenden Ansprüche, wobei die Energieschnittstelle (135) drahtlos ist.

5. Haushaltsassistent (100) nach einem der vorangehenden Ansprüche, wobei das Erweiterungsmodul (115) einen aufladbaren elektrischen Energiespeicher (180) umfasst.

6. Haushaltsassistent (100) nach einem der vorangehenden Ansprüche, wobei der Haushaltsassistent (100) ein erstes Gehäuse (120) und das Erweiterungsmodul (115) ein zweites Gehäuse (125) aufweist, und die Gehäuse (120, 125) derart geformt sind, dass sie sich zu einem einfachen geometrischen Körper ergänzen.

7. Haushaltsassistent (100) nach einem der vorangehenden Ansprüche, wobei das Erweiterungsmodul (115) eine Befestigungsvorrichtung (185) zur Anbringung an einem Küchengegenstand umfasst, mittels der es abseits vom Basismodul (110) befestigt werden kann.

8. Haushaltsassistent (100) nach einem der vorangehenden Ansprüche, wobei das Erweiterungsmodul (115) mehrere Kameras (170) umfasst, deren Blickfelder sich teilweise überlappen.

9. Haushaltsassistent (100) nach einem der vorangehenden Ansprüche, ferner umfassend eine Schwenkeinrichtung (160), die dazu eingerichtet ist, den Haushaltsassistenten (100) um eine Hochachse (165) zu schwenken.

10. Haushaltsassistent (100) nach einem der vorangehenden Ansprüche, ferner umfassend eine Abtasteinrichtung (150, 170) zur Erfassung eines Benutzers (105) und zur Bestimmung einer Richtung, in welcher sich der Benutzer (105) befindet.

## Claims

1. A household assistant (100), comprising:
- a user interface with an output apparatus in the form of a loudspeaker (145) and an input apparatus in the form of a microphone (150) for interaction with a user (105); and
- a processing facility (140);
- wherein the household assistant is designed to support the user with performing a household task,
- wherein the interaction between the user (105) and the household assistant (100) is carried out by means of voice control by way of the microphone and voice output by way of the loudspeaker;
**characterized in that**
- the household assistant comprises a base module (110) and an expansion module (115) and is designed so that the expansion module (115) can be inserted into the base module (110) such that the expansion module engages mechanically with a predetermined resistance with the base module and is thus secured against slipping and falling;
- wherein the expansion module has a camera (170); and
- the base module further comprises a wireless data interface (130) for connection to the expansion module (115) and an energy interface (135) for connection to the expansion module (115).

2. The household assistant (100) as claimed in claim 1, wherein the expansion module (115) comprises a projector (175).

3. The household assistant (100) as claimed in claim 2, wherein the camera (170) and the projector (175) are designed for interactive user guidance.

4. The household assistant (100) as claimed in one of the preceding claims, wherein the energy interface (135) is wireless.

5. The household assistant (100) as claimed in one of the preceding claims, wherein the expansion module (115) comprises a chargeable electrical energy storage unit (180).

6. The household assistant (100) as claimed in one of the preceding claims, wherein the household assistant (100) has a first housing (120) and the expansion module (115) has a second housing (125), and the housings (120, 125) are molded such that they extend to form a simple geometric body.

7. The household assistant (100) as claimed in one of the preceding claims, wherein the expansion module (115) comprises a fastening apparatus (185) for attachment to a kitchen object, by means of which it can be fastened away from the base module (110).

8. The household assistant (100) as claimed in one of the preceding claims, wherein the expansion module (115) comprises a number of cameras (170), the fields of view of which overlap partially.

9. The household assistant (100) as claimed in one of the preceding claims, further comprising a swivel facility (160), which is designed to swivel the household assistant (100) about a vertical axis (165).

10. The household assistant (100) as claimed in one of the preceding claims, further comprising a sampling facility (150, 170) for recording a user (105) and for determining a direction in which the user (105) is located.

## Revendications

1. Assistant domestique (100) comprenant :
- une interface utilisateur comprenant un moyen d'émission sous forme d'un haut-parleur (145) et un moyen d'entrée sous forme d'un microphone (150) pour une interaction avec un utilisateur (105), et
- un dispositif de traitement (140),
- dans lequel l'assistant domestique est configuré pour assister l'utilisateur dans l'exécution d'une tâche ménagère,
- dans lequel l'interaction entre l'utilisateur (105) et l'assistant domestique (100) s'effectue au moyen d'une commande vocale par le microphone et d'une émission vocale par le haut-parleur,
**caractérisé en ce que** :
- l'assistant domestique comprend un module de base (110) et un module d'extension (115), et est configuré de telle manière que le module d'extension (115) peut être inséré dans le module de base (110), de telle façon que le module d'extension s'encliquette mécaniquement avec une résistance prédéterminée sur le module de base et est protégé ainsi contre le glissement et la chute,
- dans lequel le module d'extension comprend une caméra (170), et
- le module de base comprend en outre une interface de données sans fil (130) pour une liaison avec le module d'extension (115) et une interface d'énergie (135) pour une liaison avec le module d'extension (115).

2. Assistant domestique (100) selon la revendication 1, dans lequel le module d'extension (115) comprend un projecteur (175).

3. Assistant domestique (100) selon la revendication 2, dans lequel la caméra (170) et le projecteur (175) sont configurés pour guider l'utilisateur de façon interactive.

4. Assistant domestique (100) selon l'une des revendications précédentes, dans lequel l'interface d'énergie (135) est sans fil.

5. Assistant domestique (100) selon l'une des revendications précédentes, dans lequel le module d'extension (115) comprend un dispositif de stockage d'énergie électrique rechargeable (180).

6. Assistant domestique (100) selon l'une des revendications précédentes, dans lequel l'assistant domestique (100) comprend un premier boîtier (120) et le module d'extension (115) comprend un deuxième boîtier (125), et les boîtiers (120, 125) sont formés de telle manière qu'ils se complètent pour former un corps géométrique simple.

7. Assistant domestique (100) selon l'une des revendications précédentes, dans lequel le module d'extension (115) comprend un moyen de fixation (185) pour l'installer sur un objet de cuisine, au moyen duquel il peut être fixé à l'écart du module de base (110).

8. Assistant domestique (100) selon l'une des revendications précédentes, dans lequel le module d'extension (115) comprend plusieurs caméras (170), dont les champs de vision se chevauchent en partie.

9. Assistant domestique (100) selon l'une des revendications précédentes, comprenant en outre un dispositif de pivotement (160), qui est configuré pour faire pivoter l'assistant domestique (100) autour d'un axe vertical (165).

10. Assistant domestique (100) selon l'une des revendications précédentes, comprenant en outre un dispositif d'exploration (150, 170) pour détecter un utilisateur (105) et pour déterminer une direction dans laquelle l'utilisateur (105) se trouve.
